# EUROPÄISCHE PATENTSCHRIFT

(11) **EP 2 307 274 B1**
(45) Veröffentlichungstag und Bekanntmachung des Hinweises auf die Patenterteilung: **21.12.2011**
(21) Anmeldenummer: 09777012.7
(22) Anmeldetag: 07.07.2009
(51) Int. Cl.: B64D 13/08, B64F 1/36

(54) **SYSTEM ZUR KÜHLUNG EINES FLUGZEUGBEREICHS ZUR VERBINDUNG MIT EINEM FLUGZEUGEXTERNEN LUFTAGGREGAT**
SYSTEM FOR COOLING AN AIRCRAFT ZONE, TO BE CONNECTED TO AN AIRCRAFT-EXTERNAL AIR UNIT
SYSTÈME DE REFROIDISSEMENT D'UNE ZONE D'UN AVION RELIÉ À UNE UNITÉ D'AÉRATION EXTERNE À L'AVION

(30) Priorität: 08.07.2008 DE 102008032088; 08.07.2008 US 78803
(43) Veröffentlichungstag der Anmeldung: 13.04.2011
(73) Patentinhaber: Airbus Operations GmbH, 21129 Hamburg (DE)
(72) Erfinder: KELNHOFER, Jürgen, 21635 Jork (DE); KRAKOWSKI, Dariusz, 21614 Buxtehude (DE)
(74) Vertreter: Schicker, Silvia
(86) Internationale Anmeldenummer: PCT/EP2009/004910
(87) Internationale Veröffentlichungsnummer: WO 2010/003640

(56) Entgegenhaltungen:
- WO-A-00/37313
- DE-A1-102005 049 910
- US-A- 4 835 977
- US-A1- 2004 231 350

## Beschreibung

Die vorliegende Erfindung betrifft ein System zur Kühlung eines Flugzeugbereichs, das mit einem flugzeugexternen Luftaggregat verbindbar ist.

Eine flugzeuginterne Klimaanlage benötigt für eine ordnungsgemäße Funktion hochverdichtete Prozessluft, die der Klimaanlage durch die Triebwerke oder das Hilfstriebwerk (Auxiliary Power Unit, APU) des Flugzeugs oder im Bodenbetrieb des Flugzeugs auch durch ein flugzeugexternes Hochdruck-Lufterzeugungsaggregat bereitgestellt wird. Wenn keines dieser Prozessluftversorgungssysteme verfügbar ist, kann die Flugzeugklimaanlage nicht betrieben werden. Darüber hinaus kann im Bodenbetrieb eines Flugzeugs, beispielsweise während länger andauernder Wartungsarbeiten, ein Betrieb der Flugzeugklimaanlage aus Kostengründen nicht erwünscht oder aus Sicherheitsgründen nicht möglich sein. Es ist daher üblich, Flugzeuge im Bodenbetrieb mit vorgekühlter Luft zu versorgen, die von einem flugzeugexternen Niederdruck-Lufterzeugungsaggregat bereitgestellt wird.

Niederdruck-Lufterzeugungsaggregate sind in unterschiedlichen Ausführungen und mit unterschiedlichen Kühlleistungen erhältlich. Die meisten derzeit eingesetzten Niederdruck-Lufterzeugungsaggregate stellen Kühlluft mit einer Temperatur von ca. +5°C bereit, wobei die erzeugte Kühlluftmenge sowie der Systemdruck und damit der Druck der Kühlluft jeweils von der Ausgestaltung der Niederdruck-Lufterzeugungsaggregate abhängen. Ein flugzeugexternes Niederdruck-Lufterzeugungsaggregat wird mit Hilfe von Verbindungsschläuchen an genormte flugzeugseitige Anschlüsse angeschlossen, so dass die von dem Niederdruck-Lufterzeugungsaggregat erzeugte Kühlluft in das Innere des Flugzeugs geführt werden kann. Dort wird die Kühlluft mit Hilfe flugzeug interner Luftverteilungssysteme in die zu kühlenden Flugzeugbereiche, wie z.B. die Passagierzone, das Cockpit, die Frachträume oder verschiedene Einbauräume wärmeerzeugender, insbesondere elektronischer Komponenten des Flugzeugs geleitet. Erst vor dem Start der Flugzeugtriebwerke wird das flugzeugexterne Niederdruck-Lufterzeugungsaggregat wieder von dem Flugzeug getrennt und die Kühlung der zu kühlenden Flugzeugbereiche von der Flugzeugklimaanlage übernommen.

Eine gegenwärtig eingesetzte Flugzeugklimaanlage umfasst eine in einem bedruckten Bereich des Flugzeugs angeordnete Mischkammer, der im Betrieb der Flugzeugklimaanlage von den Klimaaggregaten der Flugzeugklimaanlage sehr kalte Luft mit einer Temperatur von bis ca. -25°C und einem verhältnismäßig hohem Druck sowie warme Umluft mit einer Temperatur von ca. +30°C zugeführt wird. Die in der Mischkammer zur Einstellung einer gewünschten Temperatur gemischte Luft wird anschließend über diverse Luftverteilungsleitungen in die zu kühlenden Flugzeugbereiche geleitet. Zur Steuerung der Luftströmung innerhalb der Klimaanlage sind in die Klimaaggregate mit der Mischkammer verbindenden Leitungen jeweils entsprechende Rückschlagventile angeordnet, die verhindern, dass zur Zufuhr in die Mischkammer vorgesehene Umluft in die außerhalb des bedruckten Flugzeugbereichs angeordneten Klimaaggregate entweicht.

Wenn im Bodenbetrieb des Flugzeugs ein flugzeugexternes Niederdruck-Lufterzeugungsaggregat die Kühlung der zu kühlenden Flugzeugbereiche übernimmt, wird die von dem Niederdruck-Lufterzeugungsaggregat bereitgestellte Luft, über ein entsprechendes flugzeugseitiges Niederdruck-Luftverteilungssystem unmittelbar in die Mischkammer der Flugzeugklimaanlage geleitet. Das Niederdruck-Luftverteilungssystem umfasst eine Einlassleitung, die sich durch die unbedruckte Belly Fairing in den bedruckten Bereich des Flugzeugs in Richtung der Mischkammer erstreckt. Ein in der Einlassleitung in einem Übergangsbereich zwischen dem bedruckten und dem unbedruckten Bereich des Flugzeugs angeordnetes Rückschlagventil verhindert eine Rückströmung von Luft aus dem sich im bedruckten Bereich des Flugzeugs angeordneten Abschnitt der Einlassleitung in den sich durch den unbedruckten Flugzeugbereich erstreckenden Einlassleitungsabschnitt. Das Rückschlagventil verhindert somit, dass im Falle einer Leckage in dem im unberuckten Flugzeugbereich angeordneten Teil des Niederdruck-Luftverteilungssystems Luft aus dem bedruckten Bereich des Flugzeugs entweicht.

Bei den derzeit bekannten Flugzeugkühlsystemen wird die Kühlung der zu kühlenden Flugzeugbereiche entweder ausschließlich durch die Flugzeugklimaanlage oder ausschließlich durch das flugzeugexternes Niederdruck-Lufterzeugungsaggregat übernommen. Ein gleichzeitiger Betrieb beider Systeme ist dagegen nicht möglich. Mit anderen Worten, der Mischkammer der Flugzeugklimaanlage kann entweder Umluft und von dem flugzeugexternen Niederdruck-Lufterzeugungsaggregat erzeugte kalte Luft oder Umluft und von den Klimaaggregaten der Flugzeugklimaanlage erzeugte kalte Luft zugeführt werden. Eine flugzeuginterne Umluftfördereinrichtung, wie z.B. ein Umluftgebläse kann somit entweder gemeinsam mit dem flugzeugexternen Niederdruck-Lufterzeugungsaggregat oder gemeinsam mit den Klimaaggregaten der Flugzeugklimaanlage, nicht aber gemeinsam mit dem flugzeugexternen Niederdruck-Lufterzeugungsaggregat und den Klimaaggregaten der Flugzeugklimaanlage betrieben werden.

Ursächlich hierfür sind die unterschiedlichen Systemdrücke der Flugzeugklimaanlage einerseits und des flugzeugexternen Niederdruck-Lufterzeugungsaggregats andererseits. Die Klimaaggregate der Flugzeugklimaanlage arbeiten bei einem verhältnismäßig hohen Systemdruck. Im Vergleich dazu ist der von einem konventionellen Niederdruck-Lufterzeugungsaggregat bereitgestellte Systemdruck üblicherweise deutlich geringer. Infolgedessen würde sich aufgrund der in den Systemleitungen vorgesehenen Rückschlagventile bei einem gleichzeitigen Betrieb der Flugzeugklimaanlage und des flugzeugexternen Niederdruck-Lufterzeugungsaggregats kein stabiler Betrieb des Gesamtkühlsystems gewährleisten lassen. Stattdessen käme es zu einem "Klappern" und schließlich zu einer Beschädigung der Ventile. Darüber hinaus sind die gegenwärtig eingesetzten Niederdruck-Lufterzeugungsaggregate nicht dazu in der Lage, einen Systemdruck zu liefern, der bei einem gemeinsamen Betrieb der Flugzeugklimaanlage und eines flugzeugexternen Niederdruck-Lufterzeugungsaggregats ein sicheres Öffnen des Rückschlagventils gewährleistet, das in der das Niederdruck-Lufterzeugungsaggregat mit der Mischkammer der Flugzeugklimaanlage verbindenden Einlassleitung des Niederdruck-Luftverteilungssystems angeordnet ist.

Um einen gleichzeitigen Betrieb mit einer Flugzeugklimaanlage zu ermöglichen, müsste ein flugzeugexternes Niederdruck-Lufterzeugungsaggregat somit mit einem deutlich höheren Systemdruck arbeiten als dies heute der Fall ist. Dies würde jedoch nicht nur einen Austausch der derzeit eingesetzten Lufterzeugungsaggregate, sondern auch eine Anpassung des flugzeugseitigen Niederdruck-Luftverteilungssystems erfordern, da dieses System derzeit nicht für einen erhöhten Betriebsdruck ausgelegt ist. Darüber hinaus wäre es unter Umständen erforderlich, die in dem Gesamtkühlsystem eingesetzten Rückschlagventile durch aktiv angetriebene Ventile zu ersetzen. Schließlich hätte ein erhöhter Druck in der Mischkammer unter Umständen Einfluss auf den Betrieb der die Umluft in die Mischkammer fördernden Umluftgebläse.

Flugzeugkühlsysteme, die die zu kühlenden Flugzeugbereiche entweder ausschließlich mittels der Flugzeugklimaanlage oder ausschließlich mittels eines flugzeugexternen Niederdruck-Lufterzeugungsaggregats kühlen, haben jedoch den Nachteil, dass die Flugzeugklimaanlage so dimensioniert sein muss, dass sie im Bodenbetrieb des Flugzeugs auch an sehr heißen Tagen eine ordnungsgemäße Kühlung der zu kühlenden Flugzeugbereiche gewährleistet. Die Flugzeugklimaanlage ist daher verhältnismäßig leistungsstark, was das Systemgewicht und damit den Treibstoffverbrauch des Flugzeugs erhöht. Darüber hinaus sind bestehende Flugzeugklimaanlagen so ausgelegt, dass sie bei bestimmten Flugzeugumgebungstemperaturen eine bestimmte Temperatur in den zu kühlenden Flugzeugbereichen gewährleisten können. Tiefere Temperaturen in den zu kühlenden Flugzeugbereichen bei gleichbleibenden oder höheren Umgebungstemperaturen oder gleichbleibende Temperaturen in den zu kühlenden Flugzeugbereichen bei höheren Umgebungstemperaturen könnten folglich nur durch eine Anpassung, d.h. eine Vergrößerung der bestehenden Flugzeugklimaanlage realisiert werden. Dies würde jedoch zu Mehrkosten, Mehrgewicht sowie gegebenenfalls zu Problemen bei der Systemintegration führen. Schließlich müssen in einer Flugzeugklimaanlage zur Bereitstellung der maximalen Kühlleistung die Klimaaggregate und die Umluftgebläse bei maximaler Leistung betrieben werden. Dies hat einen hohen Energieverbrauch zur Folge.

Aus der US 2004/0231350 A1 ist eine Flugzeugklimaanlage mit einer Mischkammer bekannte, der von zwei Klimaaggregaten klimatisierte Luft zugeführt wird. Darüber hinaus wird der Mischkammer Rezirkulationsluft zugeführt, die von zwei Rezirkulationsventilatoren aus der Flugzeugkabine abgeführt wird.

Die US 4,835,977 offenbart ein flugzeugexternes Luftaggregat, das direkt mit einem Luftverteilungssystem in der Flugzeugkabine verbunden ist.

Die vorliegenden Erfindung ist auf die Aufgabe gerichtet, ein System zur Kühlung eines Flugzeugbereichs anzugeben, das mit einem flugzeugexternen Luftaggregat verbindbar ist und das im Bodenbetrieb des Flugzeugs eine energieeffiziente und flexible Kühlung des zu kühlenden Flugzeugbereichs ermöglicht, ohne dass hierfür eine entsprechende Leistungsanpassung der flugzeuginternen Klimaanlage erforderlich ist.

Zur Lösung dieser Aufgabe umfasst ein erfindungsgemäßes System zur Kühlung eines Flugzeugbereichs mindestens ein Klimaaggregat zur Bereitstellung kühler Luft, das vorzugsweise zur Anordnung in einem unbedruckten Bereich eines Flugzeugs vorgesehen ist. Beispielsweise kann das Klimaaggregat in einem Flügelwurzelbereich des Flugzeugs positioniert werden. Vorzugsweise liefert das Klimaaggregat Luft mit einer Temperatur von ca. -25°C. Der mit Hilfe des erfindungsgemäßen Kühlsystems zu kühlende Flugzeugbereich kann eine Passagierzone, ein Cockpit oder ein Frachtraum sein. Darüber hinaus kann mit Hilfe des erfindungsgemäßen Kühlsystems auch ein Einbauraum einer wärmebelasteten Komponente an Bord des Flugzeugs, wie z.B. eines Elektroniksystems gekühlt werden.

Das erfindungsgemäße Kühlsystem umfasst ferner eine beispielsweise in Form eines Gebläses ausgebildete Umluftfördereinrichtung, die dazu dient, Rezirkulationsluft aus dem zu kühlenden Flugzeugbereich, beispielsweise einer Passagierkabine in eine Mischkammer des Kühlsystems zurückzuführen. Die Mischkammer ist ferner über eine Luftverteilungsleitung mit dem Klimaaggregat verbunden. Die von der Umluftfördereinrichtung in die Mischkammer geförderte Rezirkulationsluft hat vorzugsweise eine Temperatur von ca. +30°C. In der Mischkammer erfolgt eine Vermischung mit der von dem Klimaaggregat bereitgestellten kühlen Luft. Die Umluftfördereinrichtung und die Mischkammer des erfindungsgemäßen Kühlsystems sind vorzugsweise zur Anordnung in einem bedruckten Bereich des Flugzeugs vorgesehen. Falls gewünscht oder erforderlich, kann das erfindungsgemäße Kühlsystem lediglich ein Klimaaggregat und lediglich eine Umluftfördereinrichtung umfassen. Vorzugsweise umfasst das System jedoch zwei Klimaaggregate, die jeweils in den einander gegenüberliegenden Flügelwurzelbereichen des Flugzeugs positioniert werden können. Ebenso sind vorzugsweise zwei Umluftfördereinrichtungen vorgesehen.

Das erfindungsgemäße System zur Kühlung eines Flugzeugbereichs umfasst ferner eine Einlassleitung, die mit einem flugzeugseitigen Anschluss für ein flugzeugexternes Luftaggregat, vorzugsweise ein konventionelles Niederdruck-Luftaggregat, verbunden ist. Der flugzeugseitige Anschluss für das flugzeugexterne Luftaggregat kann beispielweise im Bereich der Flügelwurzel oder im Bereich der Belly Fairing des Flugzeugs angeordnet sein. Die Einlassleitung mündet in die das Klimaaggregat mit der Mischkammer verbindende Luftverteilungsleitung. Mit anderen Worten, bei dem erfindungsgemäßen Kühlsystem ist eine zum Anschluss an ein flugzeugexternes Luftaggregat vorgesehene Einlassleitung in das Luftverteilungssystem der flugzeuginternen Klimaanlage integriert. Das erfindungsgemäße Kühlsystem ermöglicht somit einen gleichzeitigen Betrieb des Klimaaggregats, der Umluftfördereinrichtung und des flugzeugexternen Luftaggregats, da das flugzeugexterne Luftaggregat nicht länger gegen einen in der Mischkammer vorherrschenden erhöhten Systemdruck arbeiten muss. Stattdessen wird die von dem flugzeugexternen Luftaggregat beispielsweise mit einer Temperatur von ca. +5°C bereitgestellte Luft in die Luftverteilungsleitung geleitet und dort von der Strömung der von dem Klimaaggregat bereitgestellten kühlen Luft in die Mischkammer "mitgenommen".

Anders als die aus dem Stand der Technik bekannten Systeme ermöglicht das erfindungsgemäße Kühlsystem somit die Kühlung eines zu kühlenden Flugzeugbereichs durch den gleichzeitigen Betrieb einer flugzeuginternen Klimaanlage und eines konventionellen flugzeugexternen Niedrigdruck-Luftaggregats. Insbesondere an heißen Tagen ermöglicht das erfindungsgemäße Kühlsystem somit eine erhebliche Entlastung und folglich einen energieeffizienteren Betrieb der flugzeuginternen Klimaanlage. Darüber hinaus kann die Kühlleistung sowie die Betriebsflexibilität des Gesamtsystems gesteigert werden, ohne dass hierfür eine zu Mehrkosten sowie Mehrgewicht führende Leistungsanpassung der flugzeuginternen Klimaanlage erforderlich wäre. Darüber hinaus ist bei einer Umsetzung der vorliegenden Erfindung keine Anpassung der bestehenden Luftverteilungssysteme der flugzeuginternen Klimaanlage erforderlich, da diese Systeme ohnehin bereits für die im Betrieb der Klimaaggregate auftretenden hohen Betriebsdrücke ausgelegt sind.

Bei den aus dem Stand der Technik bekannten Systemen kann entweder das externe Luftaggregat gemeinsam mit dem flugzeuginternen Umluftgebläse oder das flugzeuginterne Kühlaggregat der Flugzeugklimaanlage gemeinsam mit dem flugzeuginternen Umluftgebläse betrieben werden. Bei dem erfindungsgemäßen System ist es dagegen möglich, das externe Luftaggregat gemeinsam mit dem flugzeuginternen Kühlaggregat der Flugzeugklimaanlage oder gemeinsam mit dem flugzeuginternen Kühlaggregat der Flugzeugklimaanlage und dem flugzeuginternen Umluftgebläse zu betreiben. Ferner kann bei dem erfindungsgemäßen System zur Kühlung eines Flugzeugbereichs auch ein externes Luftaggregat zu Einsatz kommen, das im Vergleich zu herkömmlichen Niederdruck-Luftaggregaten einen hohen Systemausgangsdruck aufweist. Ein derartiges externes Luftaggregat mit einem hohen Systemausgangsdruck kann ebenfalls gemeinsam mit dem flugzeuginternen Kühlaggregat der Flugzeugklimaanlage oder gemeinsam mit dem flugzeuginternen Kühlaggregat der Flugzeugklimaanlage und dem flugzeuginternen Umluftgebläse betrieben werden.

Vorzugsweise ist/sind der/die Strömungsquerschnitt(e) der Einlassleitung und/oder der Luftverteilungsleitung so gewählt, dass der Druck und/oder die Geschwindigkeit der von dem Klimaaggregat und/oder der von dem flugzeugexternen Luftaggregat bereitgestellten Luft so gesteuert werden kann/können, dass die von dem flugzeugexternen Luftaggregat bereitgestellte Luft von dem die Luftverteilungsleitung durchströmenden Luftstrom von dem Klimaaggregat mitgenommen und in die Mischkammer geleitet wird. Wenn das erfindungsgemäße Kühlsystem mit einem konventionellen flugzeugexternen Niederdruck-Luftaggregat verwendet wird, liefert das Klimaaggregat des erfindungsgemäßen Kühlsystems einen höheren Systemdruck als das flugzeugexterne Luftaggregat. Durch eine Erhöhung der Geschwindigkeit der von dem Klimaaggregat bereitgestellten und durch die Luftverteilungsleitung strömenden Luftströmung kann der dynamische Druck in der Strömung erhöht und folglich der statische Druck in der Strömung verringert werden. Daher sollte die Strömungsgeschwindigkeit des von dem Klimaaggregat bereitgestellten Luftstroms durch die Luftverteilungsleitung umso größer sein, je geringer der von dem flugzeugexternen Luftaggregat bereitgestellte Systemdruck ist. Mit anderen Worten, eine hohe Strömungsgeschwindigkeit des von Klimaaggregat bereitgestellten Luftstroms durch die Luftverteilungsleitung ist immer dann besonders vorteilhaft, wenn das flugzeugexterne Niederdruck-Luftaggregat lediglich einen limitierten Systemdruck liefern kann.

Der/die Strömungsquerschnitt(e) der Einlassleitung und/oder der Luftverteilungsleitung kann/können durch den Rohrleitungsquerschnitt der Einlassleitung und/oder der Luftverteilungsleitung festgelegt sein. Alternativ dazu ist jedoch auch eine variable Steuerung des Strömungsquerschnitts/der Strömungsquerschnitte der Einlassleitung und/oder der Luftverteilungsleitung, beispielsweise mittels einer Blende denkbar. Die variable Steuerung des Strömungsquerschnitts/der Strömungsquerschnitte der Einlassleitung und/oder der Luftverteilungsleitung kann vorzugsweise in Abhängigkeit des von dem Klimaaggregat bereitgestellten Systemdrucks und/oder des von dem flugzeugexternen Luftaggregat bereitgestellten Systemdrucks erfolgen. Da nicht auszuschließen ist, dass in Zukunft flugzeugexterne Luftaggregate verfügbar sind, die dazu in der Lage sind, einen höheren Systemdruck zu liefern als heute gängige Niederdruck-Luftaggregate, sollte eine z.B. eine Blende umfassende Steuereinrichtung zur Steuerung der Strömungsgeschwindigkeit der Luft in der Luftverteilungsleitung dazu eingerichtet sein, die Geschwindigkeit der Luftströmung innerhalb eines relativ breiten Wertebandes zu steuern.

Vorzugsweise ist/sind der/die Strömungsquerschnitt(e) der Einlassleitung und/oder der Luftverteilungsleitung so gewählt, dass der Druck und/oder die Geschwindigkeit der von dem Klimaaggregat bereitgestellten Luftströmung durch die Luftverteilungsleitung so gesteuert werden kann/können, dass eine Rückströmung von Luft aus der Luftverteilungsleitung in die Einlassleitung und in Richtung des flugzeugseitigen Anschlusses für das flugzeugexterne Luftaggregat verhindert wird. Dadurch kann selbst dann eine ordnungsgemäße Funktion des erfindungsgemäßen Kühlsystems gewährleistet werden, wenn der flugzeugseitige Anschluss für das flugzeugexterne Luftaggregat nicht vollständig luftdicht ist.

Die Einlassleitung des erfindungsgemäßen Systems zur Kühlung eines Flugzeugbereichs weist vorzugsweise einen Abschnitt auf, der eine Ausrichtung der Luftströmung in der Einlassleitung in einem Winkel von < 90° zu der Luftströmung in der Luftverteilungsleitung ermöglicht. Mit anderen Worten, die Einlassleitung ist im Bereich eines Mündungspunkts in die Luftverteilungsleitung so gestaltet, dass die die Einlassleitung durchströmende Luft nicht im Wesentlichen senkrecht auf die Luftströmung in der Luftverteilungsleitung trifft. Vorzugsweise ist die Einlassleitung so geformt, dass sie eine möglichst parallele Ausrichtung der Luftströmung in der Einlassleitung mit der Luftströmung in der Luftverteilungsleitung ermöglicht. Durch eine derartige Strömungssteuerung wird die "Mitnahme" der die Einlassleitung durchströmenden Luft mit dem die Luftverteilungsleitung durchströmenden Luftstrom erleichtert.

In einer besonders kostengünstigen und leichtgewichtigen Ausführungsform kann die gewünschte Strömungssteuerung durch eine Einlassleitung erfolgen, die im Bereich des Mündungspunkts in die Luftverteilungsleitung mit der Luftverteilungsleitung ein Y-Rohr bildet. Alternativ dazu ist auch eine Integration der die Einlassleitung durchströmenden Luftströmung in die Luftströmung in der Luftverteilungsleitung nach dem Spiral-Prinzip, dem Parallelrohr-Prinzip oder einem anderen geeigneten Strömungssteuerungsprinzip möglich.

In einer besonders bevorzugten Ausführungsform des erfindungsgemäßen Systems zur Kühlung eines Flugzeugbereichs weist die Einlassleitung jedoch einen von der Luftverteilungsleitung umgebenen Abschnitt auf, d.h. ein Abschnitt der Einlassleitung erstreckt sich konzentrisch zu der Luftverteilungsleitung und sorgt so für eine Ausrichtung der Luftströmung durch die Einlassleitung parallel zu der Luftströmung in der Luftverteilungsleitung. Die aus der Einlassleitung austretende Luft wird durch die die Luftverteilungsleitung mit hoher Geschwindigkeit durchströmende Luft nach dem Injektorprinzip mitgenommen und in die Mischkammer des erfindungsgemäßen Kühlsystems geleitet.

In einer Ausführungsform des erfindungsgemäßen Systems zur Kühlung eines Flugzeugbereichs mündet die Einlassleitung in einen außerhalb des bedruckten Bereichs des Flugzeugs angeordneten Abschnitt der Luftverteilungsleitung. Bei dieser Ausgestaltung des erfindungsgemäßen Kühlsystems erstreckt sich die Einlassleitung von dem im Bereich der Flügelwurzel oder der Belly Fairing des Flugzeugs angeordneten Anschluss für das flugzeugexterne Luftaggregat bis zu ihrem Mündungspunkt in die Luftverteilungsleitung vollständig im unbedruckten Bereich des Flugzeugs. Der Mündungspunkt der Einlassleitung in die Luftverteilungsleitung befindet sich dann vorzugsweise stromaufwärts von einem in der Luftverteilungsleitung in einem Übergangsbereich von dem bedruckten zum unbedruckten Bereich des Flugzeugs vorgesehenen Rückschlagventil, das verhindert, dass Luft aus dem innerhalb eines bedruckten Bereichs des Flugzeugs angeordneten Teil der Klimaanlage in den unbedruckten Bereich des Flugzeugs entweicht.

Alternativ dazu kann die Einlassleitung jedoch auch in einen innerhalb des bedruckten Bereichs des Flugzeugs angeordneten Abschnitt der Luftverteilungsleitung münden. In einem derartigen Fall liegt der Mündungspunkt der Einlassleitung in die Luftverteilungsleitung beispielsweise stromabwärts von dem in der Luftverteilungsleitung angeordneten Rückschlagventil und stromaufwärts von einem Mündungspunkt einer mit der Umluftfördereinrichtung verbundenen Verbindungsleitung in die Luftverteilungsleitung. Alternativ dazu kann die der Mündungspunkt der Einlassleitung in die Luftverteilungsleitung jedoch auch stromabwärts von dem in der Luftverteilungsleitung angeordneten Rückschlagventil und stromabwärts von dem Mündungspunkt der mit der Umluftfördereinrichtung verbundenen Verbindungsleitung in die Luftverteilungsleitung liegen.

Grundsätzlich sollte im Fall einer Leckage in einem im unbedruckten Flugzeugbereich angeordneten Teil des erfindungsgemäßen Kühlsystems verhindert werden, dass Luft aus dem bedruckten Teil des Flugzeugs entweicht und somit ein Druckabfall in dem bedruckten Flugzeugbereich auftritt. Um dies zu gewährleisten, kann in der Einlassleitung des erfindungsgemäßen Kühlsystems ein Rückschlagventil angeordnet sein, das eine Rückströmung von Luft durch die Einlassleitung in Richtung des flugzeugseitigen Anschlusses für das flugzeugexterne Luftaggregat verhindert. Wenn sich die Einlassleitung in den bedruckten Flugzeugbereich erstreckt, ist dieses Rückschlagventil vorzugsweise im Bereich des Übergangs von dem bedruckten zu dem unbedruckten Flugzeugbereich angeordnet. Wenn die Einlassleitung dagegen in einen außerhalb des bedruckten Bereichs des Flugzeugs angeordneten Abschnitt der Luftverteilungsleitung mündet, ist die Anordnung eines Rückschlagventils in der Einlassleitung nicht zwingend erforderlich. Wenn auf ein in der Einlassleitung angeordnetes Rückschlagventil verzichtet wird, sollte jedoch der Anschluss für das flugzeugexterne Luftaggregat ausreichend luftdicht sein, um im Betrieb des Klimaaggregats zu verhindern, dass von dem Klimaaggregat bereitgestellte Luft über den Anschluss entweicht. Falls gewünscht, kann auch ein Rückschlagventil in den flugzeugseitigen Anschluss für das flugzeugexterne Luftaggregat integriert werden.

Das erfindungsgemäße System zur Kühlung eines Flugzeugbereichs kann eine Luftabzweigleitung umfassen, die dazu eingerichtet ist, einem zu kühlenden Flugzeugbereich unabhängig von einer Luftzufuhr aus der Mischkammer Kühlluft zuzuführen. Eine derartige Luftabzweigleitung ist, bezogen auf die Luftströmung in der Luftverteilungsleitung, vorzugsweise stromabwärts einer Mündung einer die Umluftfördereinrichtung mit der Luftverteilungsleitung verbindenden Verbindungsleitung in die Luftverteilungsleitung mit der Luftverteilungsleitung verbunden. Stromaufwärts der Mündung einer die Umluftfördereinrichtung mit der Luftverteilungsleitung verbindenden Verbindungsleitung in die Luftverteilungsleitung ist dagegen bei dem erfindungsgemäßen System zur Kühlung eines Flugzeugbereichs vorzugsweise keine Luftabzweigleitung mit der Luftverteilungsleitung verbunden. Ferner sollte zwischen einem in der Luftverteilungsleitung angeordneten Rückschlagventil und einer Mündung der Luftverteilungsleitung in die Mischkammer keine Luftabzweigleitung von der Luftverteilungsleitung abzweigen, wenn in diesem Bereich der Luftverteilungsleitung keine die Umluftfördereinrichtung mit der Luftverteilungsleitung verbindende Verbindungsleitung in die Luftverteilungsleitung mündet.

Eine Konfiguration, bei der eine Luftabzweigleitung stromabwärts einer Mündung einer die Umluftfördereinrichtung mit der Luftverteilungsleitung verbindenden Verbindungsleitung in die Luftverteilungsleitung mit der Luftverteilungsleitung verbunden ist, ermöglicht einen Betrieb des flugzeugexternen Luftaggregats mit Lufttemperaturen unterhalb von 0°C, da die über die Verbindungsleitung in die Luftverteilungsleitung zugeführte warme Umluft eine ausreichende Erwärmung der die Luftverteilungsleitung und folglich die Luftabzweigleitung durchströmenden Luft gewährleistet. Eine Vereisung und damit Blockade der Luftabzweigleitung kann somit sicher verhindert werden.

Ein erfindungsgemäßes Verfahren zur Kühlung eines Flugzeugbereichs umfasst das Bereitstellen eines oben beschriebenen Systems zur Kühlung eines Flugzeugbereichs. Anschließend wird das Kühlsystem mit einem flugzeugexternen Luftaggregat verbunden. Im Betrieb des Klimaaggregats des Kühlsystems wird von dem Klimaaggregat bereitgestellte kühle Luft in die Mischkammer des Kühlsystems zugeführt. Gleichzeitig wird das flugzeugexterne Luftaggregat betrieben, so dass zusätzlich zu der von dem Klimaaggregat bereitgestellten Luft von dem flugzeugexternen Luftaggregat bereitgestellte Luft in die Mischkammer des Kühlsystems zugeführt wird.

Bei einer bevorzugten Ausführungsform des erfindungsgemäßen Verfahrens wird gleichzeitig mit dem Klimaaggregat des Systems zur Kühlung eines Flugzeugbereichs und dem flugzeugexternen Luftaggregat auch die Umluftfördereinrichtung des Systems zur Kühlung eines Flugzeugbereichs betrieben. Falls gewünscht oder erforderlich, kann ein flugzeugexternes Luftaggregat zum Einsatz kommen, das im Vergleich zu herkömmlichen Niederdruck-Luftaggregaten einen hohen Systemausgangsdruck aufweist.

Vorzugsweise wird/werden der Druck und/oder die Geschwindigkeit der von dem Klimaaggregat und/oder der von dem flugzeugexternen Luftaggregat bereitgestellten Luft so gesteuert, dass die von dem flugzeugexternen Luftaggregat bereitgestellte Luft von dem die Luftverteilungsleitung durchströmenden Luftstrom von dem Klimaaggregat mitgenommen und in die Mischkammer geleitet wird. Die Steuerung des Drucks und/oder der Geschwindigkeit der von dem Klimaaggregat und/oder der von dem flugzeugexternen Luftaggregat bereitgestellten Luft kann durch eine entsprechende Steuerung eines gegebenenfalls variablen Strömungsquerschnitts der Luftverteilungsleitung und/oder der Einlassleitung erfolgen.

Vorzugsweise wird die Luftströmung in der Einlassleitung vor der Mündung der Einlassleitung in die Luftverteilungsleitung so ausgerichtet, dass sie in einem Winkel von < 90° zu der Luftströmung in der Luftverteilungsleitung strömt. Vorzugsweise erfolgt eine im Wesentlichen parallele Ausrichtung der Luftströmungen in der Einlassleitung und der Luftverteilungsleitung.

Bevorzugte Ausführungsbeispiele der Erfindung werden nun anhand der beigefügten schematischen Zeichnungen näher erläutert, von denen
- Figur 1: eine erste Ausführungsform eines Systems zur Kühlung eines Flugzeugbereichs zeigt, das mit einem flugzeugexternen Niederdruck-Luftaggregat verbunden ist,
- Figur 2: eine Detaildarstellung einer Ausgestaltung eines Mündungsbereichs einer Einlassleitung in eine Luftverteilungsleitung des Systems gemäß Figur 1 zeigt,
- Figur 3: eine Detaildarstellung einer alternativen Ausgestaltung eines Mündungsbereichs der Einlassleitung in die Luftverteilungsleitung des Systems gemäß Figur 1 zeigt,
- Figur 4: eine zweite Ausführungsform eines Systems zur Kühlung eines Flugzeugbereichs zeigt, das mit einem flugzeugexternen Niederdruck-Luftaggregat verbunden ist, und
- Figur 5: eine dritte Ausführungsform eines Systems zur Kühlung eines Flugzeugbereichs zeigt, das mit einem flugzeugexternen Niederdruck-Luftaggregat verbunden ist.

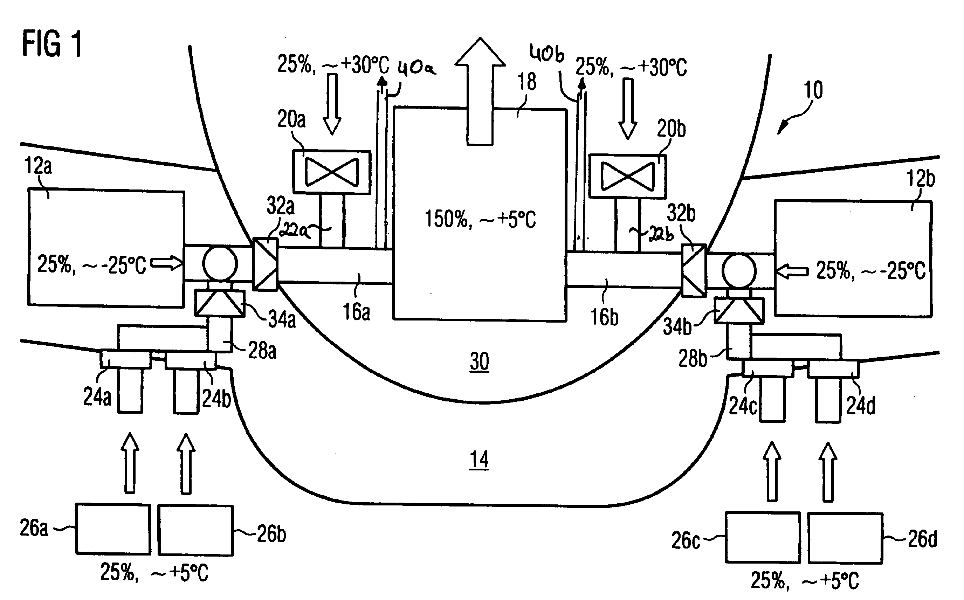

Ein in Figur 1 gezeigtes System 10 zur Kühlung eines Flugzeugbereichs umfasst zwei Klimaaggregate 12a, 12b, die jeweils in den Flügelwurzelbereichen eines Flugzeugs in einem unbedruckten Flugzeugbereich 14 angeordnet sind. Die Klimaaggregate 12a, 12b stellen kühle Luft bereit und sind über entsprechende Luftverteilungsleitungen 16a, 16b mit einer Mischkammer 18 verbunden. In der Mischkammer 18 wird die von den Klimaaggregaten 12a, 12b bereitgestellte Luft mit Umluft gemischt, die mit Hilfe von Umluftgebläsen 20a, 20b aus einem zu kühlenden Flugzeugbereich gesaugt wird. Die von dem Umluftgebläsen 20a, 20b geförderte Luft wird über Verbindungsleitungen 22a, 22b zunächst in die Luftverteilungsleitungen 16a, 16b und von dort in die Mischkammer 18 geführt.

Das Kühlsystem 10 umfasst ferner vier flugzeugseitige Anschlüsse 24a, 24b, 24c, 24d, die im Bereich der Flügelwurzel des Flugzeugs angeordnet und jeweils mit einem flugzeugexternen Niederdruck-Luftaggregat 26a, 26b, 26c, 26d verbunden sind. Die Anschlüsse 24a, 24b, 24c, 24d können auch im Bereich einer Belly Fairing des Flugzeugs positioniert sein. Darüber hinaus können, je nach Bedarf, weniger als vier oder mehr als vier Anschlüsse 24a, 24b, 24c, 24d vorgesehen sein. Eine erste Einlassleitung 28a verbindet die Anschlüsse 24a, 24b mit der Luftverteilungsleitung 16a. In ähnlicher Weise verbindet eine zweite Einlassleitung 28b die Anschlüsse 24c, 24d mit der Luftverteilungsleitung 16b. Die Mündungspunkte der Einlassleitungen 28a, 28b in die Luftverteilungsleitungen 16a, 16b liegen jeweils in dem unbedruckten Flugzeugbereich 14, d.h. außerhalb eines bedruckten Flugzeugbereichs 30 stromaufwärts von in den Luftverteilungsleitungen 16a, 16b angeordneten Rückschlagventilen 32a, 32b. Die Rückschlagventile 32a, 32b verhindern eine Rückströmung von der Mischkammer 18 zuzuführenden Luft, insbesondere Umluft in die Klimaaggregate 12a, 12b.

Die Anschlüsse 24a, 24b, 24c, 24d sind luftdicht ausgebildet, so dass Luft, die im Betrieb der Klimaaggregate 12a, 12b von den Klimaaggregaten erzeugt wird, nicht über die Anschlüsse 24a, 24b, 24c, 24d entweichen kann. Aus Redundanzgründen sind jedoch in der ersten und der zweiten Einlassleitung 28a, 28b zusätzliche Rückschlagventile 34a, 34b angeordnet, die selbst dann ein Entweichen der von den Klimaaggregaten 12a, 12b bereitgestellten Luft verhindern, wenn Probleme mit der Dichtigkeit der Anschlüsse 24a, 24b, 24c, 24d auftreten sollten. Für den Fall, dass dies beispielsweise aus Gewichtsersparnisgründen erwünscht sein sollte, kann auf die redundanten Rückschlagventile 34a, 34b verzichtet werden. Ferner ist es denkbar, die Rückschlagventile 34a, 34b in die Anschlüsse 24a, 24b, 24c, 24d zu integrieren.

Im Betrieb des Kühlsystems 10 wird der Mischkammer 18 von den Klimaaggregaten 12a, 12b kühle Luft mit einer Temperatur von ca. -25°C zugeführt. Ferner wird von den Umluftgebläsen 20a, 20b Umluft mit einer Temperatur von ca. +30°C in die Mischkammer 18 geleitet. Schließlich liefern die flugzeugexternen Luftaggregate 26a, 26b, 26c, 26d kühle Luft mit einer Temperatur von ca. +5°C, wobei der Betrieb der Klimaaggregate 12a, 12b, der Umluftgebläse 20a, 20b und der flugzeugexternen Luftaggregate 26a, 26b, 26c, 26d gleichzeitig erfolgt. Die in der Mischkammer 18 zur Einstellung einer gewünschten Temperatur gemischten Luftströme werden schließlich einem zu kühlenden Flugzeugbereich zugeführt. Der zu kühlende Flugzeugbereich kann eine Passagierzone, ein Cockpit oder ein Frachtraum des Flugzeugs sein. Ferner kann die Luft auch einem Einbauraum einer wärmebelasteten Komponente, insbesondere einer Elektronikkomponente des Flugzeugs zugeführt werden. Im Betrieb liefern die Klimaaggregate 12a, 12b, die Umluftgebläse 20a, 20b und die flugzeugexternen Luftaggregate 26a, 26b, 26c, 26d jeweils ungefähr 25% der insgesamt benötigten Luftmenge, so dass in der Mischkammer 28 schließlich 150% der benötigten Luftmenge zur Verfügung steht.

Die flugzeugexternen Luftaggregate 26a, 26b, 26c, 26d liefern einen Systemdruck, der deutlich niedriger ist als der von den Klimaaggregaten 12a, 12b bereitgestellte Systemdruck. Um bei einem gleichzeitigen Betrieb der Klimaaggregate 12a, 12b, der Umluftgebläse 20a, 20b und der flugzeugexternen Luftaggregate 26a, 26b, 26c, 26d eine ordnungsgemäße Funktion des Gesamtkühlsystems 10 zu gewährleisten, muss daher dafür gesorgt werden, dass die von den flugzeugexternen Luftaggregaten 26a, 26b, 26c, 26d in die Einlassleitungen 28a, 28b zugeführte Luftströmung von der die Luftverteilungsleitungen 16a, 16b durchströmenden Luftströmung von den Klimaaggregaten 26a, 26b mitgenommen und in die Mischkammer 18 geleitet wird. Um die "Mitnahme" der Luftströmung aus den Einlassleitungen 28a, 28b durch die Luftströmung in den Luftverteilungsleitungen 16a, 16b zu ermöglichen, erfolgt daher im Bereich der Mündungspunkte der Einlassleitungen 28a, 28b in die Luftverteilungsleitungen 16a, 16b eine Ausrichtung der Strömung in den Einlassleitungen 28a, 28b in einem Winkel < 90° zur Strömung in den Luftverteilungsleitungen 16a, 16b.

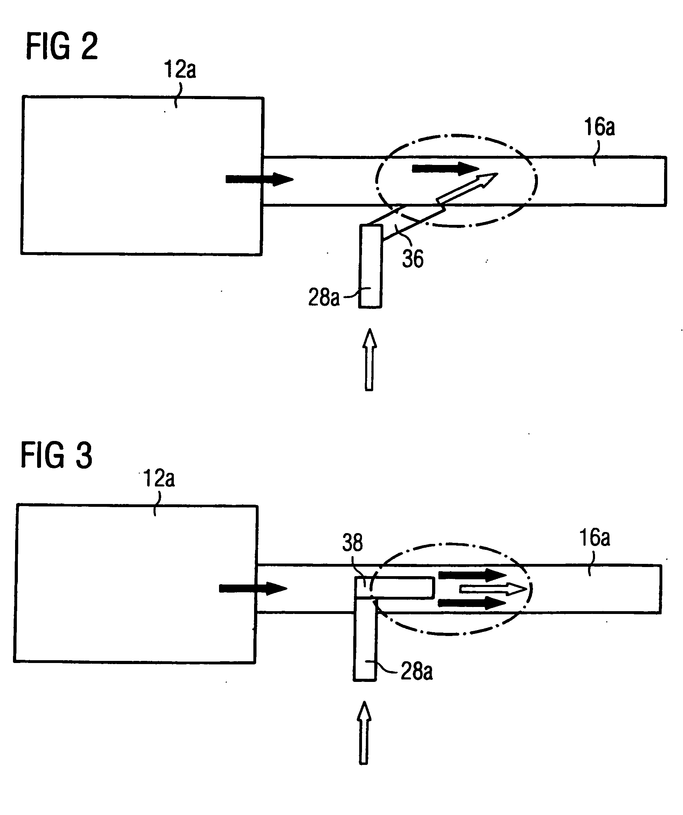

Wie in Figur 2 veranschaulicht ist, kann die Ausrichtung der Strömung in den Einlassleitungen 28a, 28b durch eine Y-Rohranordnung erfolgen. Zu diesem Zweck weist die Einlassleitung 28a einen Abschnitt 36 auf, der sich in einem Winkel von ca. 30° zu der entsprechenden Luftverteilungsleitung 16a erstreckt. Je kleiner der Winkel zwischen dem Abschnitt 36 der Einlassleitung 28a und der entsprechenden Luftverteilungsleitung 16a, desto "paralleler" die Ausrichtung der Strömungen durch die Einlassleitung 28a und die Luftverteilungsleitung 16a und desto einfacher die "Mitnahme" der Luftströmung aus der Einlassleitung 28a durch die Strömung in der Luftverteilungsleitung 16a.

Die Strömungsquerschnitte der Einlassleitungen 28a, 28b und der Luftverteilungsleitungen 16a, 16b sind jeweils so gewählt, dass der Druck und/oder die Geschwindigkeit der Luftströmung in den Einlassleitungen 28a, 28b und den Luftverteilungsleitungen 16a, 16b so gesteuert werden kann/können, dass die von den flugzeugexternen Luftaggregaten 26a, 26b, 26c, 26d bereitgestellte Luft wie gewünscht von dem die Luftverteilungsleitungen 16a, 16b durchströmenden Luftstrom von den Klimaaggregaten 12a, 12b mitgenommen und in die Mischkammer 18 geleitet wird. Falls gewünscht oder erforderlich, kann mittels einer beispielsweise eine Blende umfassenden Steuereinrichtung eine variable Steuerung der Strömungsquerschnitte der Einlassleitungen 28a, 28b und der Luftverteilungsleitungen 16a, 16b vorgesehen sein. Grundsätzlich gilt, dass die Geschwindigkeit der Luftströmung durch die Luftverteilungsleitungen 16a, 16b umso größer sein sollte, je geringer der von den flugzeugexternen Luftaggregaten 26a, 26b, 26c, 26d bereitgestellte Systemdruck ist.

Figur 3 zeigt eine alternative Ausgestaltung des Mündungsbereichs einer Einlassleitung 28a in die zugehörige Luftverteilungsleitung 16a. Die Einlassleitung 28a umfasst einen Abschnitt 38, der sich konzentrisch zu der Luftverteilungsleitung 16a erstreckt. Die den Abschnitt 38 der Einlassleitung 28a durchströmenden Luft wird somit parallel zu der Strömung in der Luftverteilungsleitung 16a ausgerichtet und gemäß dem Wasserstrahlpumpen- oder Injektorprinzip durch die mit hoher Geschwindigkeit durch die Luftverteilungsleitung 16a strömende Luft mitgerissen und in die Mischkammer 18 geleitet. Wiederum sind die Strömungsquerschnitte der Einlassleitung 28a und der Luftverteilungsleitung 16a so gewählt, dass eine ordnungsgemäße "Mitnahme" der Luftströmung aus der Einlassleitung 28a in Richtung der Mischkammer 18 durch die Strömung in der Luftverteilungsleitung 16a möglich ist.

Schließlich umfasst das in Figur 1 gezeigte System 10 zur Kühlung eines Flugzeugbereichs eine Luftabzweigleitung 40a, 40b, die dazu eingerichtet ist, einem zu kühlenden Flugzeugbereich unabhängig von einer Luftzufuhr aus der Mischkammer 18 Kühlluft zuzuführen. Die Luftabzweigleitung 40a, 40b ist, bezogen auf die Luftströmung in der Luftverteilungsleitung 16a, 16b stromabwärts der Mündung der das Umluftgebläse 20a, 20b mit der Luftverteilungsleitung 16a, 16b verbindenden Verbindungsleitung 22a, 22b in die Luftverteilungsleitung 16a, 16b mit der Luftverteilungsleitung 16a, 16b verbunden. Dadurch wird ein Betrieb der flugzeugexternen Luftaggregate 26a, 26b, 26c, 26d mit Lufttemperaturen unterhalb von 0°C ermöglicht, da die über die Verbindungsleitung 22a, 22b in die Luftverteilungsleitung 16a, 16b zugeführte warme Umluft eine ausreichende Erwärmung der die Luftverteilungsleitung 16a, 16b und folglich die Luftabzweigleitung 40a, 40b durchströmenden Luft gewährleistet. Eine Vereisung und damit Blockade der Luftabzweigleitung 40a, 40b kann somit sicher verhindert werden.

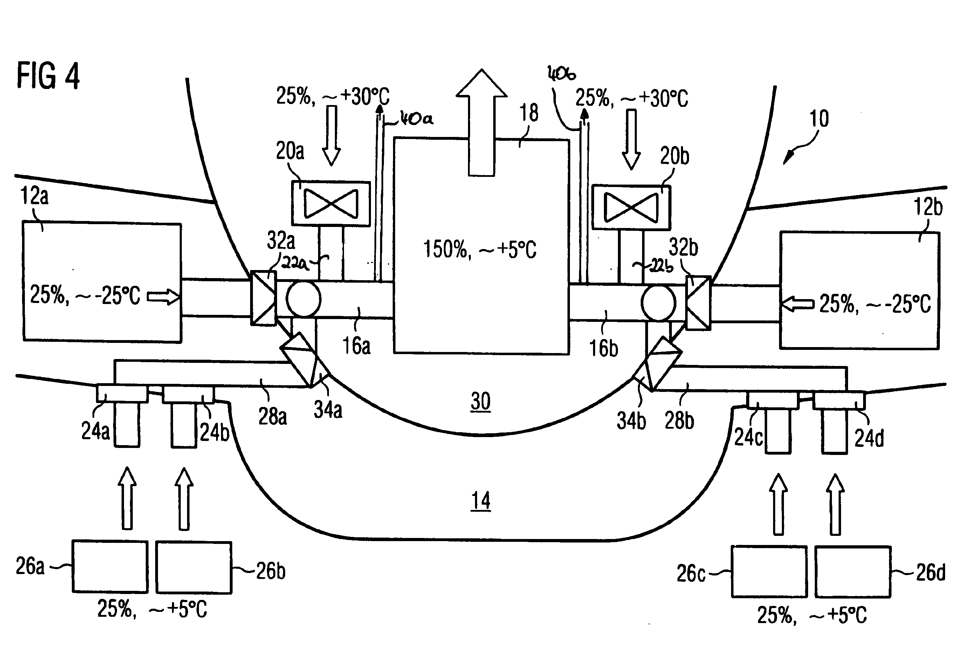

Die in Figur 4 gezeigte Ausführungsform eines Kühlsystems 10 unterscheidet sich von der Anordnung gemäß Figur 1 dadurch, dass die Einlassleitungen 28a, 28b nicht innerhalb des unbedruckten Flugzeugbereichs 14, sondern innerhalb des bedruckten Flugzeugbereichs 30 in die entsprechenden Luftverteilungsleitungen 16a, 16b münden. Insbesondere liegt der Mündungspunkt der Einlassleitungen 28a, 28b in die Luftverteilungsleitungen 16a, 16b stromabwärts der in den Luftverteilungsleitungen 16a, 16b angeordneten Rückschlagventile 32a, 32b, jedoch stromaufwärts der Mündungspunkte der Verbindungsleitungen 22a, 22b in die Luftverteilungsleitungen 16a, 16b.

Die in den Einlassleitungen 28a, 28b angeordneten Rückschlagventile 34a, 34b verhindern im Fall einer Leckage in dem im unbedruckten Flugzeugbereich 14 angeordneten Teils der Einlassleitungen 28a 28b ein Entweichen von Luft aus dem bedruckten Flugzeugbereich 30. Im Übrigen entsprechen der Aufbau und die Funktionsweise der Anordnung gemäß Figur 4 dem Aufbau und der Funktionsweise des in Figur 1 gezeigten Systems.

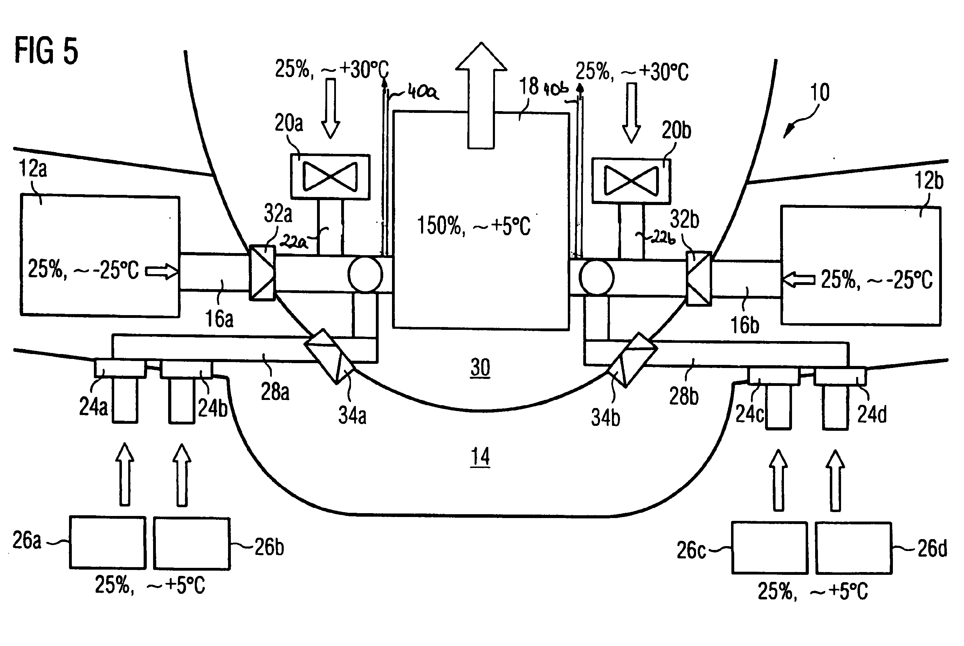

Das in Figur 5 veranschaulichte Kühlsystem 10 unterscheidet sich schließlich von der Anordnung gemäß Figur 4 dadurch, dass die Einlassleitungen 28a, 28b nicht stromaufwärts des Mündungspunkts der Verbindungsleitungen 22a, 22b von den Umluftgebläsen 20a, 20b in die Luftverteilungsleitungen 16a, 16b münden, sondern der Mündungspunkt der Einlassleitungen 28a, 28b in die Luftverteilungsleitungen 16a, 16b stromabwärts des Mündungspunkts der Verbindungsleitungen 22a, 22b in die Luftverteilungsleitungen 16a, 16b liegt. Im Übrigen entsprechen der Aufbau und die Funktionsweise der Anordnung gemäß Figur 5 dem Aufbau und der Funktionsweise des in Figur 4 gezeigten Systems.

## Patentansprüche

1. System (10) zur Kühlung eines Flugzeugbereichs mit:
- einem Klimaaggregat (12a, 12b) zur Bereitstellung kühler Luft,
- einer Umluftfördereinrichtung (20a, 20b) und
- einer Mischkammer (18), die über eine Luftverteilungsleitung (16a, 16b) mit dem Klimaaggregat (12a, 12b) verbunden ist und der von der Umluftfördereinrichtung (20a, 20b) Umluft zuführbar ist,
**dadurch gekennzeichnet, dass** eine Einlassleitung (28a, 28b), die mit einem flugzeugseitigen Anschluss (24a, 24b, 24c, 24d) für ein flugzeugexternes Luftaggregat (26a, 26b, 26c, 26d) verbunden ist, in die das Klimaaggregat (12a, 12b) mit der Mischkammer (18) verbindende Luftverteilungsleitung (16a, 16b) mündet.

2. System zur Kühlung eines Flugzeugbereichs nach Anspruch 1,
**dadurch gekennzeichnet, dass** der/die Strömungsquerschnitt(e) der Einlassleitung (28a, 28b) und/oder der Luftverteilungsleitung (16a, 16b) so gewählt ist/sind, dass der Druck und/oder die Geschwindigkeit der von dem Klimaaggregat (12a, 12b) und/oder der von dem flugzeugexternen Luftaggregat (26a, 26b, 26c, 26d) bereitgestellten Luft so gesteuert werden kann/können, dass die von dem flugzeugexternen Luftaggregat (26a, 26b, 26c, 26d) bereitgestellte Luft von dem die Luftverteilungsleitung (16a, 16b) durchströmenden Luftstrom von dem Klimaaggregat (12a, 12b) mitgenommen und in die Mischkammer (18) geleitet wird.

3. System zur Kühlung eines Flugzeugbereichs nach Anspruch 1 oder 2,
**dadurch gekennzeichnet, dass** die Einlassleitung (28a, 28b) einen Abschnitt aufweist, der eine Ausrichtung der Luftströmung in der Einlassleitung (28a, 28b) in einem Winkel < 90° zu der Luftströmung in der Luftverteilungsleitung (16a, 16b) ermöglicht.

4. System zur Kühlung eines Flugzeugbereichs nach einem der Ansprüche 1 bis 3,
**dadurch gekennzeichnet, dass** die Einlassleitung (28a, 28b) einen von der Luftverteilungsleitung (16a, 16b) umgebenen Abschnitt aufweist.

5. System zur Kühlung eines Flugzeugbereichs nach einem der Ansprüche 1 bis 4,
**dadurch gekennzeichnet, dass** die Einlassleitung (28a, 28b) in einen außerhalb eines bedruckten Bereichs (30) des Flugzeugs angeordneten Abschnitt der Luftverteilungsleitung (16a, 16b) mündet.

6. System zur Kühlung eines Flugzeugbereichs nach einem der Ansprüche 1 bis 4,
**dadurch gekennzeichnet, dass** die Einlassleitung (28a, 28b) in einen innerhalb des bedruckten Bereichs (30) des Flugzeugs angeordneten Abschnitt der Luftverteilungsleitung (16a, 16b) mündet.

7. System zur Kühlung eines Flugzeugbereichs nach einem der Ansprüche 1 bis 6,
**dadurch gekennzeichnet, dass** in der Einlassleitung (28a, 28b) ein Rückschlagventil (34a, 34b) angeordnet ist und/oder dass in den mit der Einlassleitung (28a, 28b) verbundenen flugzeugseitigen Anschluss (24a, 24b, 24c, 24d) für das flugzeugexterne Luftaggregat (26a, 26b, 26c, 26d) ein Rückschlagventil integriert ist.

8. System zur Kühlung eines Flugzeugbereichs nach einem der Ansprüche 1 bis 7,
**dadurch gekennzeichnet, dass** eine Luftabzweigleitung (40a, 40b), die dazu eingerichtet ist, einem zu kühlenden Flugzeugbereich Kühlluft zuzuführen, bezogen auf die Luftströmung in der Luftverteilungsleitung (16a, 16b), stromabwärts einer Mündung einer die Umluftfördereinrichtung (20a, 20b) mit der Luftverteilungsleitung (16a, 16b) verbindenden Verbindungsleitung (22a, 22b) in die Luftverteilungsleitung (16a, 16b) mit der Luftverteilungsleitung (16a, 16b) verbunden ist.

9. Verfahren zur Kühlung eines Flugzeugbereichs mit den Schritten:
- Bereitstellen eines Systems (10) zur Kühlung eines Flugzeugbereichs nach einem der Ansprüche 1 bis 8,
- Verbinden des Systems (10) zur Kühlung eines Flugzeugbereichs mit einem flugzeugexternen Luftaggregat (26a, 26b, 26c, 26d),
- Betreiben des Klimaaggregats (12a, 12b) und Zuführen von kühler Luft, die von dem Klimaaggregat (12a, 12b) bereitgestellt wird, in die Mischkammer (18) und
- gleichzeitiges Betreiben des flugzeugexternen Luftaggregats (26a, 26b, 26c, 26d) und Zuführen von kühler Luft, die von dem flugzeugexternen Luftaggregat (26a, 26b, 26c, 26d) bereitgestellt wird, in die Mischkammer (18).

10. Verfahren zur Kühlung eines Flugzeugbereichs nach Anspruch 9,
**dadurch gekennzeichnet, dass** gleichzeitig mit dem Klimaaggregat (12a, 12b) des Systems (10) zur Kühlung eines Flugzeugbereichs und dem flugzeugexternen Luftaggregat (26a, 26b, 26c, 26d) die Umluftfördereinrichtung (20a, 20b) des Systems (10) zur Kühlung eines Flugzeugbereichs betrieben wird.

11. Verfahren zur Kühlung eines Flugzeugbereichs nach Anspruch 9 oder 10,
**dadurch gekennzeichnet, dass** der Druck und/oder die Geschwindigkeit der von dem Klimaaggregat (12a, 12b) und/oder der von dem flugzeugexternen Luftaggregat (26a, 26b, 26c, 26d) bereitgestellten Luft so gesteuert wird/werden, dass die von dem flugzeugexternen Luftaggregat (26a, 26b, 26c, 26d) bereitgestellte Luft von dem die Luftverteilungsleitung (16a, 16b) durchströmenden Luftstrom von dem Klimaaggregat (12a, 12b) mitgenommen und in die Mischkammer (18) geleitet wird.

12. Verfahren zur Kühlung eines Flugzeugbereichs nach einem der Ansprüche 9 bis 11,
**dadurch gekennzeichnet, dass** die Luftströmung in der Einlassleitung (28a, 28b) in einem Winkel < 90° zu der Luftströmung in der Luftverteilungsleitung (16a, 16b) ausgerichtet wird.

## Claims

1. System (10) for cooling an aircraft region with:
- an air conditioning unit (12a, 12b) for providing cool air,
- a circulating air conveying device (20a, 20b) and
- a mixing chamber (18) which is connected to the air conditioning unit (12a, 12b) via an air distribution line (16a, 16b) and to which circulating air can be fed by the circulating air conveying device (20a, 20b),
**characterised in that** an inlet line (28a, 28b), which is connected to an aircraft-side connection (24a, 24b, 24c, 24d) for an aircraft-external air unit (26a, 26b, 26c, 26d), opens into the air distribution line (16a, 16b) connecting the air conditioning unit (12a, 12b) to the mixing chamber (18).

2. System for cooling an aircraft region according to Claim 1,
**characterised in that** the flow cross-section(s) of the inlet line (28a, 28b) and/or the air distribution line (16a, 16b) is/are selected so that the pressure and/or the velocity of the air provided by the air conditioning unit (12a, 12b) and/or the aircraft-external air unit (26a, 26b, 26c, 26d) can be controlled in such a way that the air provided by the aircraft-external air unit (26a, 26b, 26c, 26d) is carried along by the air flow from the air conditioning unit (12a, 12b) flowing through the air distribution line (16a, 16b) and is led into the mixing chamber (18).

3. System for cooling an aircraft region according to Claim 1 or 2,
**characterised in that** the inlet line (28a, 28b) has a portion which makes it possible to direct the air flow in the inlet line (28a, 28b) at an angle < 90° to the air flow in the air distribution line (16a, 16b).

4. System for cooling an aircraft region according to one of Claims 1 to 3,
**characterised in that** the inlet line (28a, 28b) has a portion surrounded by the air distribution line (16a, 16b).

5. System for cooling an aircraft region according to one of Claims 1 to 4,
**characterised in that** the inlet line (28a, 28b) opens into a portion of the air distribution line (16a, 16b) arranged outside a pressurised region (30) of the aircraft.

6. System for cooling an aircraft region according to one of Claims 1 to 4,
**characterised in that** the inlet line (28a, 28b) opens into a portion of the air distribution line (16a, 16b) arranged inside the pressurised region (14) of the aircraft.

7. System for cooling an aircraft region according to one of Claims 1 to 6,
**characterised in that** a check valve (34a, 34b) is arranged in the inlet line (28a, 28b) and/or **in that** a check valve is integrated into the aircraft-side connection (24a, 24b, 24c, 24d), connected to the inlet line (28a, 28b), for the aircraft-external air unit (26a, 26b, 26c, 26d).

8. System for cooling an aircraft region according to one of Claims 1 to 7,
**characterised in that** an air branch line (40a, 40b) which is configured to feed cooling air to an aircraft region to be cooled is connected to the air distribution line (16a, 16b), in relation to the air flow in the air distribution line (16a, 16b), downstream of a point at which a connecting line (22a, 22b) connecting the circulating air conveying device (20a, 20b) to the air distribution line (16a, 16b) opens into the air distribution line (16a, 16b).

9. Method for cooling an aircraft region with the steps:
- providing a system (10) for cooling an aircraft region according to one of Claims 1 to 8,
- connecting the system (10) for cooling an aircraft region to an aircraft-external air unit (26a, 26b, 26c, 26d),
- operating the air conditioning unit (12a, 12b) and feeding cool air which is provided by the air conditioning unit (12a, 12b), into the mixing chamber (18) and
- simultaneously operating the aircraft-external air unit (26a, 26b, 26c, 26d) and feeding cool air which is provided by the aircraft-external air unit (26a, 26b, 26c, 26d), into the mixing chamber (18).

10. Method for cooling an aircraft region according to Claim 9,
**characterised in that** the circulating air conveying device (20a, 20b) of the system (10) for cooling an aircraft region is operated simultaneously with the air conditioning unit (12a, 12b) of the system (10) for cooling an aircraft region and the aircraft-external air unit (26a, 26b, 26c, 26d).

11. Method for cooling an aircraft region according to Claim 9 or 10,
**characterised in that** the pressure and/or the velocity of the air provided by the air conditioning unit (12a, 12b) and/or the aircraft-external air unit (26a, 26b, 26c, 26d) is/are controlled in such a way that the air provided by the aircraft-external air unit (26a, 26b, 26c, 26d) is carried along by the air flow from the air conditioning unit (12a, 12b) flowing through the air distribution line (16a, 16b) and is led into the mixing chamber (18).

12. Method for cooling an aircraft region according to one of Claims 9 to 11,
**characterised in that** the air flow in the inlet line (28a, 28b) is directed at an angle < 90° to the air flow in the air distribution line (16a, 16b).

## Revendications

1. Système (10) de refroidissement d'une zone d'avion comportant :
- une unité de climatisation d'air (12a, 12b) pour fournir de l'air frais,
- un dispositif de transport d'air ambiant (20a, 20b) et
- une chambre de mélange (18) qui est reliée à l'unité de climatisation d'air (12a, 12b) par une conduite de distribution d'air (16a, 16b) et peut être alimentée en air ambiant par le dispositif de transport d'air ambiant (20a, 20b),
**caractérisé en ce qu'**une conduite d'entrée (28a, 28b), qui est reliée à un branchement du côté avion (24a, 24b, 24c, 24d) destiné à une unité d'aération (26a, 26b, 26c, 26d) extérieure à l'avion, débouche dans la conduite de distribution d'air (16a, 16b) reliant l'unité de climatisation d'air (12a, 12b) à la chambre de mélange (18).

2. Système de refroidissement d'une zone d'avion selon la revendication 1,
**caractérisé en ce que** la/les section(s) de passage de la conduite d'entrée (28a, 28b) et/ou de la conduite de distribution d'air (16a, 16b) est/sont choisie(s) de sorte que la pression et/ou la vitesse de l'air fourni par l'unité d'aération (26a, 26b, 26c, 26d) extérieure à l'avion et/ou par l'unité de climatisation (12a, 12b) peut/peuvent être commandée(s) de sorte que l'air fourni par l'unité d'aération (26a, 26b, 26c, 26d) extérieure à l'avion est emporté par le courant d'air provenant de l'unité de climatisation (12a, 12b) et traversant la conduite de distribution d'air (16a, 16b) pour être amené dans la chambre de mélange (18).

3. Système de refroidissement d'une zone d'avion selon la revendication 1 ou 2,
**caractérisé en ce que** la conduite d'entrée (28a, 28b) présente un segment qui permet une orientation du flux d'air dans la conduite d'entrée (28a, 28b) selon un angle de < 90° par rapport au flux d'air dans la conduite de distribution d'air (16a, 16b).

4. Système de refroidissement d'une zone d'avion selon l'une des revendications 1 à 3,
**caractérisé en ce que** la conduite d'entrée (28a, 28b) présente un segment entouré par la conduite de distribution d'air (16a, 16b).

5. Système de refroidissement d'une zone d'avion selon l'une des revendications 1 à 4,
**caractérisé en ce que** la conduite d'entrée (28a, 28b) débouche dans un segment de la conduite de distribution d'air (16a, 16b) disposé à l'extérieur de la zone pressurisée de l'avion (30).

6. Système de refroidissement d'une zone d'avion selon l'une des revendications 1 à 4,
**caractérisé en ce que** la conduite d'entrée (28a, 28b) débouche dans un segment de la conduite de distribution d'air (16a, 16b) disposé à l'intérieur de la zone pressurisée (30) de l'avion.

7. Système de refroidissement d'une zone d'avion selon l'une des revendications 1 à 6,
**caractérisé en ce qu'**un clapet anti-retour (34a, 34b) est placé dans la conduite d'entrée (28a, 28b) et/ou qu'un clapet anti-retour est intégré dans le branchement du côté avion (24a, 24b, 24c, 24d) relié à la conduite d'entrée (28a, 28b) et destiné à l'unité d'aération (26a, 26b, 26c, 26d) extérieure à l'avion.

8. Système de refroidissement d'une zone d'avion selon l'une des revendications 1 à 7,
**caractérisé en ce qu'**une conduite de dérivation d'air (40a, 40b), qui est conçue pour alimenter en air frais une zone d'avion à refroidir, est, par rapport au flux d'air dans la conduite de distribution d'air (16a, 16b), reliée à cette dernière en aval de l'embouchure dans la conduite de distribution d'air (16a, 16b) d'une conduite de raccordement (22a, 22b) reliant le dispositif de transport d'air ambiant (20a, 20b) à la conduite de distribution d'air (16a, 16b).

9. Procédé de refroidissement d'une zone d'avion comprenant les étapes suivantes :
- la mise à disposition d'un système (10) de refroidissement d'une zone d'avion selon l'une des revendications 1 à 8,
- le raccordement du système (10) de refroidissement d'une zone d'avion à une unité d'aération extérieure à l'avion (26a, 26b, 26c, 26d),
- le fonctionnement de l'unité de climatisation (12a, 12b) et l'alimentation de la chambre de mélange (18) en air frais fourni par l'unité de climatisation (12a, 12b), et
- le fonctionnement simultané de l'unité d'aération (26a, 26b, 26c, 26d) extérieure à l'avion et l'alimentation de la chambre de mélange (18) en air frais fourni par l'unité d'aération (26a, 26b, 26c, 26d) extérieure à l'avion.

10. Procédé de refroidissement d'une zone d'avion selon la revendication 9,
**caractérisé en ce que** le dispositif de transport d'air ambiant (20a, 20b) du système (10) de refroidissement d'une zone d'avion fonctionne en même que l'unité de climatisation (12a, 12b) du système (10) de refroidissement d'une zone d'avion et l'unité d'aération (26a, 26b, 26c, 26d) extérieure à l'avion.

11. Procédé de refroidissement d'une zone d'avion selon la revendication 9 ou 10,
**caractérisé en ce que** la pression et/ou la vitesse de l'air fourni par l'unité de climatisation (12a, 12b) et/ou par l'unité d'aération (26a, 26b, 26c, 26d) extérieure à l'avion par peut/peuvent être commandée(s) de sorte que l'air fourni par l'unité d'aération (26a, 26b, 26c, 26d) extérieure à l'avion est emporté par le courant d'air provenant de l'unité de climatisation (12a, 12b) et traversant la conduite de distribution d'air (16a, 16b) pour être amené dans la chambre de mélange (18).

12. Système de refroidissement d'une zone d'avion selon l'une des revendications 9 à 11,
**caractérisé en ce que** le flux d'air dans la conduite d'entrée (28a, 28b) est orienté selon un angle de < 90° par rapport au flux d'air dans la conduite de distribution d'air (16a, 16b).
